# EUROPEAN PATENT SPECIFICATION

(11) **EP 1 763 942 B1**
(45) Date of publication and mention of the grant of the patent: **21.12.2011**
(21) Application number: 04749139.4
(22) Date of filing: 05.07.2004
(51) Int. Cl.: H04W 28/18, H04L 29/08, H04L 12/56

(54) **METHODS AND DEVICES FOR SUPPLYING QUALITY OF SERVICE PARAMETERS IN HTTP MESSAGES**
VERFAHREN UND EINRICHTUNGEN ZUM BEREITSTELLEN VON DIENSTQUALITÄTSPARAMETERN IN HTTP-NACHRICHTEN
PROCEDES ET DISPOSITIFS DE FOURNITURE DE PARAMETRES DE QUALITE DE SERVICE DANS DES MESSAGES HTTP

(43) Date of publication of application: 21.03.2007
(73) Proprietor: Telefonaktiebolaget L M Ericsson (publ), 164 83 Stockholm (SE)
(72) Inventor: SKOG, Robert, S-165 76 Hässelby (SE)
(74) Representative: Barrett, Peter Andrew John
(86) International application number: PCT/SE2004/001103
(87) International publication number: WO 2006/004472

(56) References cited:
- WO-A1-01/33782
- WO-A1-02/067605
- US-A1- 2002 120 749
- US-A1- 2004 057 412

## Description

### CROSS-REFERENCE TO RELATED APPLICATIONS

This application is related to commonly-assigned co-pending international patent application No. PCT/SE04/001087, entitled "Binding Mechanism for Quality of Service Management in a Communication Network ", filed on July 5, 2004; international patent application No. PCT/SE04/001102, entitled "Methods and Devices for Changing Quality of Service ", filed on July 5, 2004; and international patent application No. PCT/SE04/001086, entitled "Devices and Methods for Push Message Initiated Service ", filed on July 5, 2004.

### FIELD OF THE INVENTION

The present invention relates to methods and devices in mobile communication systems offering packet data service. In particular the invention relates to an end user utilizing services offered by an service provider, via an client terminal, and to the use of Quality of Service classes to adapted a transmission to an expected grade of service.

### BACKGROUND

Modern mobile communication systems providing packet switched services, such as Universal Mobile Telecommunication System (UMTS) should be capable of supporting a large and diverse variety of applications having different demands on needed transmission capacity, sensitivity to delays in the transmission and demands on interactivity, for example. The applications range from a simple transfer of a text message, which is an example of an application that does not require high capacity nor is time critical, to video conferencing, which is a real time application requiring high transmission capacity. The concept of Quality of Service (QoS) was introduced to ensure that an end user, running an application, receives the system resources required for that particular application. At the same time, by not using more recourses than necessary for the application, the use of QoS contributes to the optimization of the use of the system resources, in particular the scarce radio resources. How QoS is implemented in UMTS is described in the technical specifications 3GPP TS 23.107 V6.1.0 (2004-03) and 3GPP TS 23.207 V6.2.0 (2004-03).

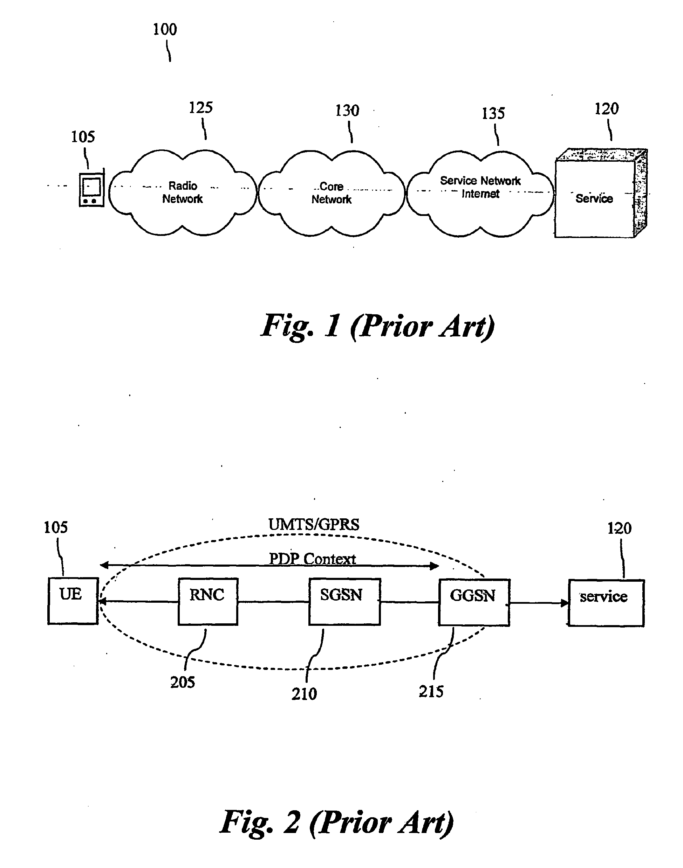

Illustrated in FIG. 1 is a generic mobile communication system wherein QoS may be utilized. The mobile communication system 100 comprises a client terminal 105 which may communicate with a network node, for example an application server 120, to use service provided by a service provider, for example. The client terminal 105 should be seen as a representation of various equipment, including, but is not limited to, mobile (cellular) phones, laptop computers and PDAs with communication abilities, and is also commonly referred to as User Equipment (UE) or Mobile Station (MS). A radio access network (RAN) 125, a core network (CN) 130 and a service network (SN) 135 are involved and interacting in providing the communication between the client terminal 105 and the application server 120.

In UMTS QoS is defined with a set of attributes that specifies the UMTS bearer service. The UMTS QoS attributes are the following:
- Traffic class
- Maximum bit-rate
- Guaranteed bit-rate
- Delivery order
- Maximum SDU size
- SDU format information
- SDU error ratio
- Residual bit error ration
- Delivery of erroneous SDUs
- Transfer delay
- Traffic handling priority
- Allocation/Retention Priority
- Source statistics descriptor
- Signalling Indication

These attributes can be mapped to the pre-defined UMTS QoS classes: Conversational class, Streaming class, Interactive class and Background class. The QoS classes are specified to the communication system by the Packet Data Protocol (PDP) context.

FIG. 2 illustrates schematically communication between a client terminal 105 and the application server 120 in UMTS. The communication occurs via the RNC (Radio Network Controller) 205 and the main nodes SGSN (Serving GPRS support node) 210 and GGSN (Gateway GPRS support node) 215 of the CN 130, to the application server 120 in the SN 135.

In the prior art UMTS implementations the QoS classes are negotiated and managed by using PDP context management. Application level QoS requirements are mapped to PDP context parameters in the client terminal. Pre-configurations of PDP contexts are made in the client terminal such that when a packet switched application starts and connects to the network a matching pre-configured PDP context is activated. This PDP context has a selected QoS class that should match the desired QoS requirements of the application. If for instance the application is a WAP or HTTP browser, the QoS class of the activated PDP context is usually the Interactive class, which is a type of "best effort". Illustrated in FIG. 2 with an arrow 220, is the PDP context, defining the required QoS class, originating from the client terminal 115 and received by the GGSN 215.

US2004/00587412 describes a method and communication system for transmission of multi-media streams. An attribute field of the session description protocol is used to inform the receiving party about the resources needed for the communication. The receiving party can then ask the wireless network to select a proper bearers service for the connection. The receiving communication device is informed of at least one parameter of the transmission of the multi-media stream for reservation of network resources.

Today, an application, or service node, for example a WWW server may influence the selection of QoS class performed in the client terminal by the Session Description Protocol (SDP). The WWW server may want, in order to effectuate a streaming session, for example, to use another bearer better suited for the download, than the already in use. The WWW server may then issue a SDP document to the client terminal, specifying the desired QoS class. Subsequently, the client terminal will have to initiate the actual change of QoS, before the downloading can be performed.

In short, the selection of QoS class can be seen as a process controlled by an application in the client terminal and typically performed during the establishment of a communication session. The selection of QoS class is typically, in practice, static for the session. However, it is well recognized that a browsing session, for example, may exhibit very varying demands on the amount of information to be transferred to the end user. For example in searching, selecting and downloading media files such as music- or videoclips, the searching and selecting impose very moderate demands on the speed of the transfer, whereas the actual downloading may need a bearer of 128 Kb/s or preferably even higher. To constantly use the QoS class only necessary for the most demanding task in a browser session is a waste of radio resources and have a negative, impact on the battery life of especially user equipment, since typically more power is consumed while using the high capacity transfer. Thus, there is a need for devices and methods that better adapt to the fluctuations of the required QoS.

### SUMMARY OF THE INVENTION

An object of the present invention is to provide devices and methods that allow a for a network node, or an application in an network node, in the service network to determine appropriate QoS parameters for a bearer service between the client terminal and the application, and to initiate an update of quality of service.

The above stated object is achieved by means of a method in a network node according to claim 1, a network node according to claim 24 and computer program products according to claims 21 and 22.

The basic idea of the present invention is to provide a method and arrangement in a first network node so that the network node may easily determine required QoS parameters suitable for a certain content. A message from a second network node is received by the first network node as a response of the content request from a client terminal. The message should contain the requested content and information on required quality of service parameters for delivering the content to the client terminal. The information on required quality of service parameters is read by the first network node to determine second quality of service parameters, whereby facilitating an update of quality of service parameters to the second quality of service parameters. The method may further identify a requirement for changing quality of service parameters during an ongoing communication session and initiate a modification of quality of service parameters.

According to a first aspect of the present invention a method in the network node is provided which comprises the steps of:
- *receiving* a content request issued by the client terminal;
- *forwarding* the request to the second network node;
- *receiving* a message from the second network node as a response of the forwarded request, the message comprising the requested content and information on required quality of service parameters for delivering the content to the client terminal;
- *reading* from the message the information on required quality of service parameters, and determining second quality of service parameters based on said information on required quality of service parameters; and
- *issuing* an update from the initial quality of service parameters to the second quality of service parameters.

Whereby a delivery of a response to the content request can be performed with the use of the second quality of service parameters.

According to a second aspect of the method of present invention the message is a dedicated MIME-type.

According to a third aspect of the method of present invention the message comprises at least one content part and at least one header part and wherein the quality of service information is provided in the header part. The message may for example be a HTTP response message and the quality of service information is provided in a header line.

According to a fourth aspect of the method of present invention the information on required quality of service parameters is a representation of a quality of service class, preferably from the group of pre-defined UMTS quality of service classes comprising: conversational class, streaming class, interactive class and background class.

According to a fitht aspect of the method of present invention, the method may further comprise a step of *determining* if quality of service parameters should be updated, said determining based on a comparison (510) of the initial quality of service parameters with the second quality of service parameters, and wherein the step of issuing only is taken if an update is determined in the determining step.

The network node according to the invention is adapted to provide access to services from a service provider in a communication session wherein a client terminal utilizes services provided via the network node and wherein initial quality of service parameters are used. The network node comprises:
- quality of service determining means, adapted to, on a content request issued by the client terminal, determine second quality of service parameters associated to the requested content The quality of service determining means is adapted for communication with interface means for interfacing a second network node. The interface means is adapted to forwarding and receiving messages to and from the second network node, and is adapted to read or decode the messages from the second network node; and
- quality of service modification means adapted to issue an update from the initial quality of service parameters to the second quality of service parameters, by the use of an update PDP context message.

Thanks to the invention a network node may identify that a response to a content request would benefit from a change of quality of service parameters during an ongoing communication session. If appropriate the network node initiates and effectuates the change of quality of service parameters.

One advantage afforded by the present invention is that the communication system better adapts to varying needs in bearer capacity, typically occurring in a browsing-downloading scenario, wherein media files are downloaded via the network node to the client terminal.

A further advantage is that thanks to the invention, a more efficient uses of the scarce radio resources is made possible, since unnecessary high quality of service, i.e. high bearer capacity, is avoided at times then not explicitly needed.

Yet a further advantage is that since high bearer capacity is used only then explicitly necessary the power consumption is kept at a minimum. This is of greatest importance in user equipment since the battery life hence is prolonged.

Yet a further advantage of the arrangement of the present invention is that the content and the quality of service parameters suitable for delivering the content is contained within the same message. In that way the number of messages exchanged between the first and second network node can be reduced and a reliable connection between the content and the quality of service parameters is achieved.

Further advantages and features of embodiments of the present invention will become apparent when reading the following detailed description in conjunction with the drawings.

### BRIEF DESCRIPTION OF THE DRAWINGS

Fig. 1 is a schematic illustration of a generic mobile communication system;
Fig. 2 is a schematic illustration of the use of PDP context in a mobile communication system;
Fig. 3a is a schematic illustration of a mobile communication system therein the method and arrangements according to the present invention may by used, and 3b is a schematic illustration of the functional parts implemented as software code means of the network node according to the invention;
Fig. 4 is a signal/message sequence scheme illustrating the method according to the present invention;
Fig. 5a is a flowchart of the method according to the present invention, and 3b a flowchart of one embodiment of the method according to the present invention;
Fig. 6 is a schematic illustration of the MIME-type according to one embodiment of the present invention; and
Fig. 7 is a schematic illustration of the HTTP response header according to one embodiment of the present invention.

### DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

The present invention is applicable to packet switched services in a mobile communication system, which services typically are provided by a service provider and utilized by an end user with the aid of a client terminal. In particular the present invention relates, but is not limited, to scenarios wherein the end user is browsing web-pages or the like to find and download content such as music, pictures and movie clips, which hereinafter will be referred to as media files. A usage that is characterized by very varying demands on the transmission capacity- for the browsing a "best effort" transmission often suffice, while a download of a media file, for example, impose very high demands on the transmission capacity. As described in the background section prior art methods and arrangement fail to accommodate to the rapid changes in demands of transmission capacity during certain applications such as downloading of media files.

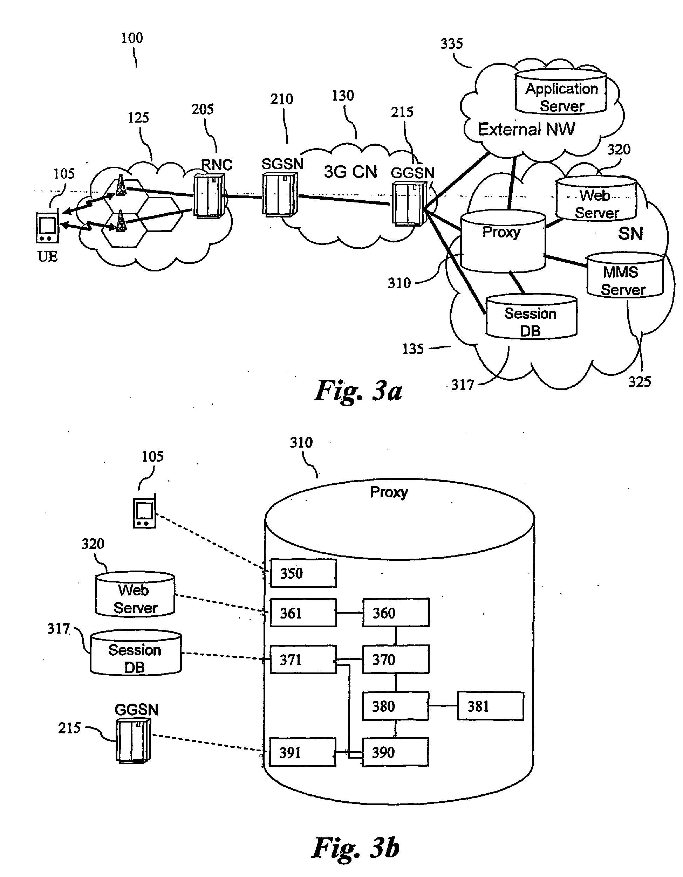

Fig. 3 is a schematic view of a mobile communication system in which the present invention may be used. The mobile communication system 100 comprises a client terminal 105 which may communicate with a network node 310 of a service provider and thereby receive a service that is offered by the service provider. The network node 310 is typically a proxy for the client terminal 105 in the utilization of a WWW-server 320. The communication between the client terminal 105 and the network node 310, typically involves three separate but interconnected networks, the radio access network (RAN) 125, the core network (CN) 130 and the service network (SN) 135. Possible radio access networks 125 includes, but is not limited to, WCDMA, CDMA2000, Wireless LAN or GPRS network. The core and service networks are commonly realized as IP-based or ATM-based communication networks.

The client terminal 105 resides in the radio access network (RAN) 125, which is controlled by at least one Radio Network Controller (RNC) 205 which is in communication with a Serving GPRS support node (SGSN) 210 of the core network 130. The CN 130 are via Gateways nodes in communication with other networks. The Gateway GPRS support node (GGSN) 215 interconnects the CN 130 with the service network 135. The GGSN 215 may further communicate with a session database 317. The network node 310, or proxy, of which the client terminal 105 communicates is part of the service network 135, and may in turn be connected to a further networks node providing the actual service, for example a WWW server 320, an MMS server 325 or application other types of application servers. All of which are part of the service network 135. The network node 310, or proxy, may also be in connection to servers which are not part of the service network 135, but belongs to external networks 335.

According to the present invention is to provide a method and arrangement is provided in a first network node 310 so that the network node may easily determine required QoS parameters suitable for a certain content. A message from a second network node 320, 325 is received by the first network node 310 as a response of the content request from the client terminal 105. The message should contain the requested content and information on required quality of service parameters for delivering the content to the client terminal. The information on required quality of service parameters is read by the first network node 310 to determine second quality of service parameters, whereby facilitating an update of quality of service parameters to the second quality of service parameters. The method may further identify a requirement for changing quality of service parameters during an ongoing communication session and initiate a modification of quality of service parameters. The process is preferably initiated by and controlled by an application in the network node 310.

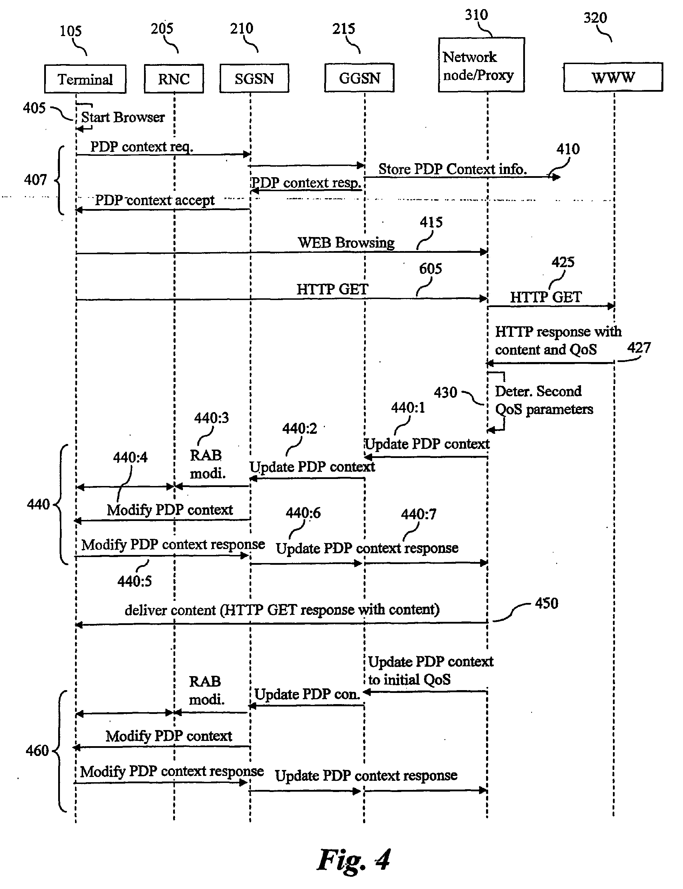

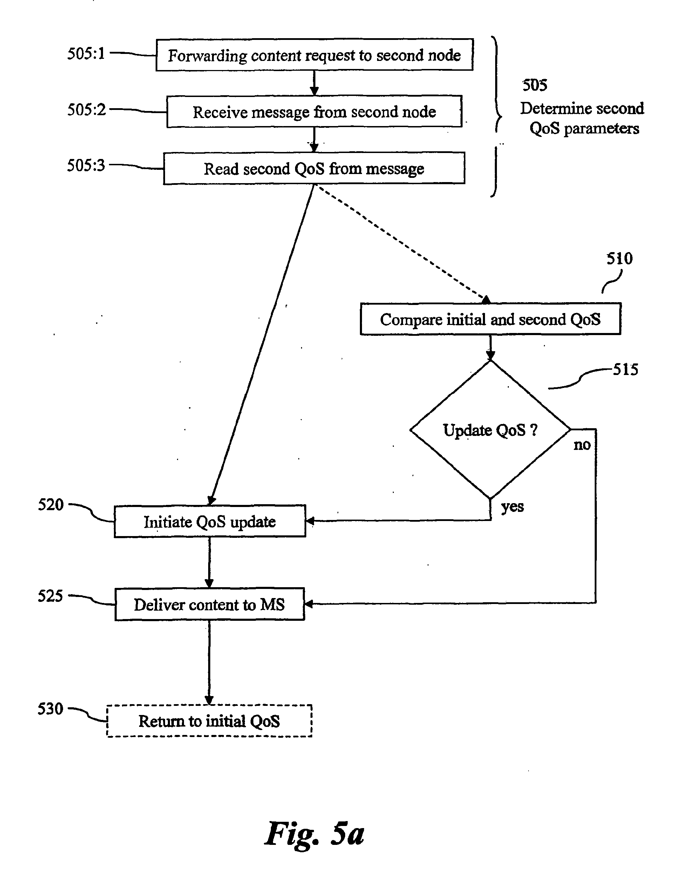

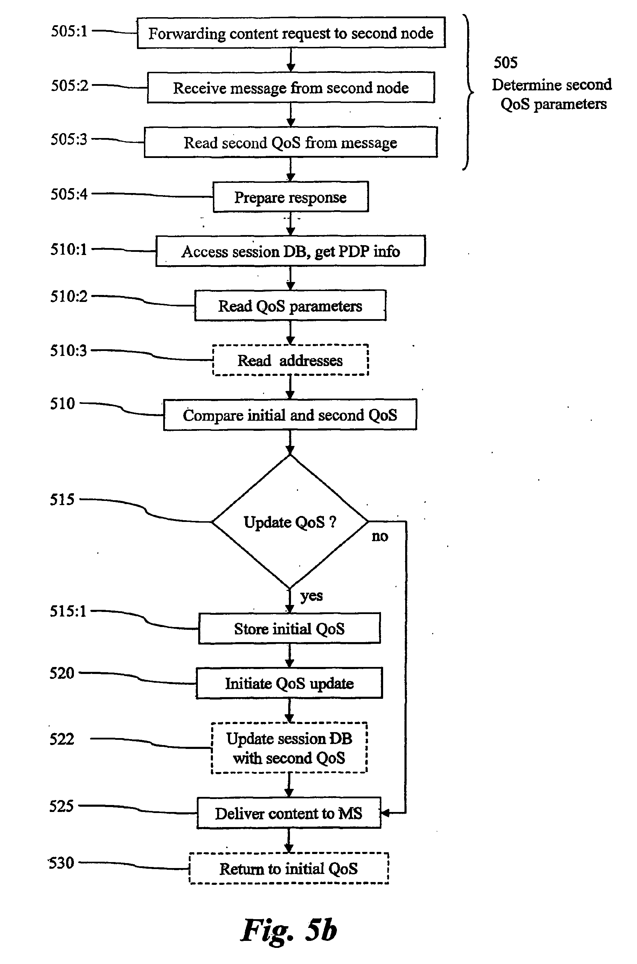

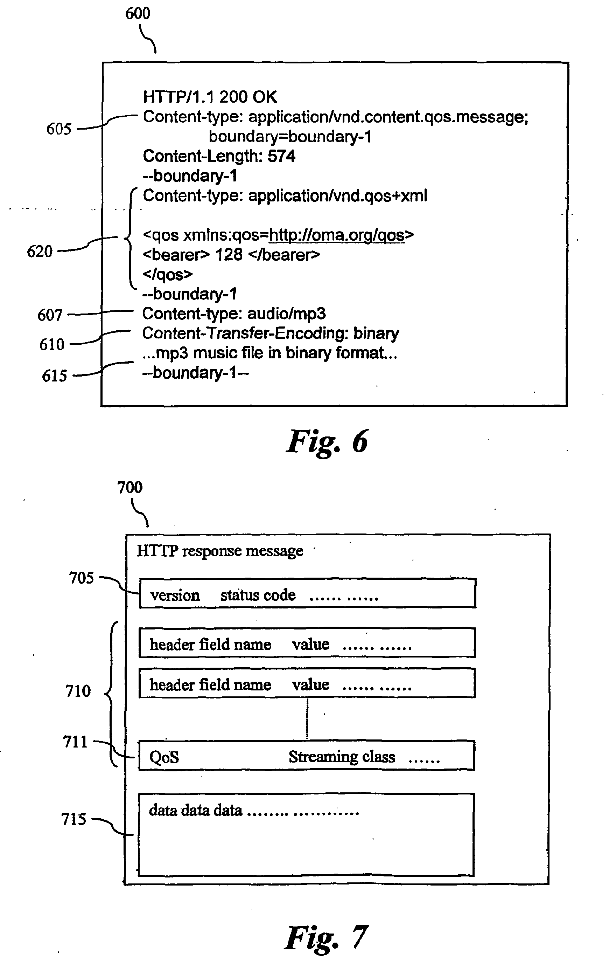

The method and arrangement according to the invention will be described in an UMTS network and with reference to the schematic signalling scheme depicted in Fig. 4 and the flowchart of Fig. 5a and 5b. Embodiments of the present invention are illustrated in Fig. 6 and Fig. 7.

The method according to the present invention is applicable during a communication session between the client terminal 105 and the network node 310, as illustrated by the signalling scheme of Fig. 4. On an application layer the communication is between an terminal application, for example a browser 405, and the application of the service provider 410, via the proxy application 415 in the network node 310. The communication session has been set up according to the standard procedures which are known in the art. Only the steps of the set up procedure necessary for the understanding of the inventive method will therefore be described. The steps of setting up the communication session should not be regarded as part of the invention.

A communication session typically begins with an end user initiating a packet service application in the client terminal 105, by starting a WEB browser 405, for example. In UMTS PDP context management is used to set up the session with appropriate QoS class, among other parameters. Upon starting an application in the client terminal 105 the application level QoS requirements are mapped to PDP context parameters in the client terminal, typically by activation of a pre-configured PDP context specifying a QoS class which should match the applications QoS requirements. A negotiation process involving the SGSN 210 and the GGSN 215, establish initial QoS parameters to be used in the communication session, as illustrated in the set up part 407 of Fig. 4. The GGSN 215 stores PDP context information in the session data base, indicated by arrow 410. After completion of the set up the communication session proceeds with the establishment of the application level communication, arrow 415, in the current example a WEB browsing session, between the application (browser) in the client terminal 105 and the proxy application of the network node 310.

During the web browsing a content request is issued from the application of the client terminal 105, for example a request of downloading a media file from the WWW server, arrow 420. One example of a content request is a "HTTP GET" message issued to the proxy application 415 of the network node 310. The proxy forwards the request to the WWW server, arrow 425. The WWW server prepares a message comprising both the content and information on the required QoS parameters for effective deliverance of the content, and issues the message as a HTTP response to the proxy, arrow 427. The proxy receives the message, reads and analyze the QoS parameters, and possibly prepares a content delivery according to the above described. The association of QoS parameters to the content will be further discussed below.

The network node 310 initiates a process for modifying 440 the QoS parameters used in the session by issuing an update of PDP context, to the GGSN 215. The network node 310 needs to have information on which GGSN 215 to address, and preferably also include information which the GGSN 215 may use to identify the client terminal 105. Preferably, the network node 310 retrieves this information from the session database 317, which will be further discussed below. The further PDP updating process, arrows 440: 2, 3, 4, 5, 6, involves the GGSN 215, SGSN 210, RNC 205 and the Client terminal 105 is performed according to the standard, and hence is well known for the skilled in the art. The GGSN 215 forwards the PDP context response issued by the client terminal 105 to inform the network node 100 of the result of the updating process, arrows 440:7.

The result of the updating process is either that the communication is now occurring according to the requested QoS defined by the second QoS parameters, or that it was not possible to comply to the requested update, for example due to temporary constrains in the radio environment. In the latter case the updating process may result in a QoS that is lower than the requested (second QoS parameters), but possibly higher than the initial QoS parameters. The network node 310 will then have to decide if the content should be delivered with the available QoS or if the process should be abandoned. In most cases a media file will be practically impossible to transfer, or at last highly inconvenient, below a certain transfer right.

Accordingly, the network node 310 should in most cases choose to abandon the delivery process if the suitable QoS can not be used. Information on if lower QoS than the requested could still be used for the content (file type) in question, may be included in the second QoS parameters or communicated to the network node 310 by other means.

Upon completion of the Update PDP context, the network node 310 delivers the requested content to the client terminal 105, arrow 450, wherein the second QoS parameters are used.

Alternatively the network node 310 determines if a modification of the QoS parameters used in the session would benefit the delivery of the content to the client terminal 105 by comparing the initial QoS parameters with the second QoS parameters 430. The network node 310 preferably retrieves information on the initial QoS parameters from the PDP context information stored in the session database 317.

If the network node 310 has determined a change to the temporary QoS parameters, e.g. if the initial QoS parameters corresponds to a lower QoS class than the second QoS parameters the modification process is initiated according to the above described. If not, the QoS do not need to be updated in order for the network node 310 to effectively respond to the request.

The application of the network node 310 may further check if the requested QoS comply with the capabilities of the client terminal 105 and with the restrictions of the end user's subscription. A process often referred to as policy check, and which is known in the art. An improved policy check, that may be advantageously utilized in this invention is taught in the above referred application "Binding Mechanism for Quality of Service Management in a Communication Network".

The network node 310 may after completion of the delivery of the media file, for example, initiate a return to the initial QoS parameters 460. This is performed by an Update PDP context, identical to the Update PDP context described above.

The process of changing QoS during the communication session is according to the method of the invention initiated and controlled from the network node 310. The method in the network node 310 is illustrated in the flowchart of Fig. 5a and comprises the steps of:
505: Determining, on an content request issued by the client terminal 105, second QoS parameters, or a representation of second QoS parameters, associated to the requested content by:
   505:1 Forwarding the content request to a second network node, for example a service provider server.
   505:2 Receiving a message from the second network node as a response of the forwarded content request of step 505:1. Contained within the message is the requested content and information on required QoS parameters for delivering the content to the client terminal 105.
   505:3 Reading from the message the information on required QoS parameters and determining second QoS parameters based on said information on required quality of service parameters. The required QoS parameters may be in a format directly usable as the second QoS parameters, a specification of a QoS class or a alphanumeric representation which the application of the network node 310 may convert to second QoS parameters.
520: Initiate a modification of quality of service parameters by issuing an update from the initial quality of service parameters to the second quality of service parameters.
525: Delivering the requested content to the client terminal 105 with the use of the second QoS parameters.

In many cases it would be favourable to check if the modification of quality of service parameters is necessary, for example to check if the used initial QoS parameters are the same as the second. An alternative embodiment of the method according to the invention comprises the additional steps, to be taken prior to the issuing step (520), of:
510: Comparing the initial QoS parameters with the second QoS parameters.
515: Determining if the QoS parameters should be updated, based on the comparison in step 510. If the second QoS parameters indicate a QoS that is higher, i.e. requires higher bearer capacity, than the QoS in use (the initial QoS parameters) a requirement for updating QoS parameters is identified, for effectuating the content delivery. If not, the content delivery may be performed with the initial QoS parameters, i.e. the QoS parameters do not need to be updated, and hence, the issuing step (520) is not to be taken.

The method may in addition comprise the optional steps of:
523: Preparing the response to the client terminal by removing the information on the QoS parameters from the message.

As discussed above the message (HTTP response) should contain both the content and QoS parameters, or a representation of QoS parameters, required for the delivery of the response. The message should prefarbly be of a type that can be widely used and interpreted. A suitable format for the combined content and QoS information may be based on Multipurpose Internet Mail Extensions (MIME). MIME refers to an official Internet standard that specifies how messages must be formatted so that they can be exchanged between different systems and has become widely used in for example downloading content via browsers. MIME is a very flexible format, permitting one to include virtually any type of file or document in an email message. Specifically, MIME messages can contain text, images, audio, video, or other application-specific data. A description of MIME can be found in the IETF (Internet Engineering Task Force) publication RFC 1521, 1522.

According to the present invention, in order to meet the demands on flexibility in the use of QoS parameters arising from the varying requirements during a browsing session, a new MIME-type is introduced. The new MIME-type is illustrated in FIG. 6. The MIME-type comprises, among other fields, a main header 605, content-type 607, transfer encoding 610 and content 615, which also is present in the prior art MIME. In the MIME-type according to the invention a new field is introduced, the QoS field 620, specifying the required or desired QoS needed to efficiently transfer the MIME message. The QoS field is preferably, but not necessarily a subfield to the field "content type". The use of the new MIME-type offers an effective way of exchanging the content and the QoS information. One prerequisite is that the application of the network node 310 needs to have knowledge about this particular MIME-type in order to correctly use the QoS information and to prepare a message which is understandable for the client terminal 105.

As an alternative to using the modified MIME, the information on QoS can be contained in a HTTP header, which represents an alternative embodiment of the invention. In this embodiment, the second network node, e.g. the WWW server, prepares a regular HTTP response, schematically illustrated in Fig. 7, which typically includes a status line 705 indicating version, status code etc, a plurality of header lines 710 which could specify content type and content length, and an entity body 715 comprising the actual data. According to the embodiment of the invention also QoS information is included in the header, preferably as a QoS line 711 among the other header lines specifying content type, size etc. This message format is very versatile. If, for example, the QoS information provided in the header line 711, is not understandable to the proxy application of the network node 310, this information will simply be discarded and the HTTP response delivered anyway. However, probably not with the optimum QoS parameters.

In several steps of the method described with reference to Fig. 5, information on the ongoing communication is needed. Such information is advantageously retrieved from the session database 317. The step 510 of comparing the initial QoS parameters with the second QoS parameters, may comprise the substeps of:
510:1 Accessing the session database 317 to retrieve the PDP information associated with the communication session.
510:2 Reading from the PDP information the initial QoS parameters. The QoS are preferably stored as "Negotiated QoS" defined in the 3GPP TS 24.008.
510:3 Optionally reading addressing information from the PDP information.

The step 515 of determining if the QoS parameters should be updated may comprise the substeps of:
515:1 Storing temporarily the initial QoS parameters to be used in the optional returning to the initial QoS parameters.

The method may in addition comprise the optional steps of:
522: Optionally accessing the session database 317 to update the PDP information with the second QoS parameters. The step to be taken after the modifying step 520 and prior to the delivering step 525.
530: Returning to the use of the initial QoS parameters by issuing an update from the second QoS parameters to the initial QoS parameters similar to step 520. The step to be taken after the delivering step 525.

The information optionally read by the network node 310 in step 510:3 may primarily be used for the application to find end-users GGSN 215 and for the GGSN 215 to map the request to the right GTP (GPRS Tunnel Protocol), i.e. to find the GTP associated with the client terminal 105. Table 1 specifies information concerning addressing that is contained (among other information) in the PDP information of the session database 317 related to the ongoing communication session.

**Table 1 Attributes in the Session database**

| | |
|---|---|
| NAS IP Address | The IP address of the RADIUS client that sent the request. This is usually the IAS or GGSN. |
| IP Address | The IP address that is allocated to the terminal. |
| Calling Station Id (MSISDN) | The MSISDN of the connected terminal |
| IMSI | The International Mobile Subscriber Identity |
| Negotiated QoS | The negotiated quality of service as defined in *3GPP TS 24.008* |

The NAS IP address can be used by the application of the network node 310 to send the "Update-PDP-request" to the right GGSN 215. IMSI (or MSISDN) can preferably be included in the message from the network node 310 for the GGSN 215 to find the right GTP. Alternatively the session database is updated with a GTP identifier, which directly identifies the GTP of the ongoing communication session.

A most preferred embodiment, comprising a plurality of the presented substeps and options is illustrated in the flowchart according to Fig 5b, comprises the steps of:
505: Determining, on an content request issued by the client terminal 105, second QoS parameters, or a representation of second QoS parameters, associated to the requested content by:
   505:1 Forwarding the content request to a second network node, for example a service provider server.
   505:2 Receiving a message from the second network node as a response of the forwarded content request of step 505:1. Contained within the message is the requested content and information on required QoS parameters for delivering the content to the client terminal 105.
   505:3 Reading from the message the information on required QoS parameters and determining second QoS parameters based on said information on required quality of service parameters. The required QoS parameters may be in a format directly usable as the second QoS parameters, a specification of a QoS class or a alphanumeric representation which the application of the network node 310 may convert to second QoS parameters.
   505:4 Preparing the response to the client terminal by removing the information on the QoS parameters from the message.
510: Comparing the initial QoS parameters with the second QoS parameters by:
   510:1 Accessing the session database 317 to retrieve the PDP information associated with the communication session.
   510:2 Reading from the PDP information the initial QoS parameters. The QoS are preferably stored as "Negotiated QoS" defined in the 3GPP TS 24.008.
   510:3 Reading addressing information from the PDP information.
515: Determining if the QoS parameters should be updated, based on the comparison in step 510. If the second QoS parameters indicate a QoS that is higher, i.e. requires higher bearer capacity, than the QoS in use (the initial QoS parameters) a requirement for updating QoS parameters is identified, for effectuating the content delivery. If not, the content delivery may be performed with the initial QoS parameters, i.e. the QoS parameters do not need to be updated. Storing temporarily (substep 515:1) the initial QoS parameters to be used in the optional returning to the initial QoS parameters.
520: Initiate a modification, if a requirement of modification is identified in the determining step, of quality of service parameters by issuing an update from the initial quality of service parameters to the second quality of service parameters.
522: Accessing the session database 317 to update the PDP information with the second QoS parameters.
525: Delivering the requested content to the client terminal 105 with the use of the second QoS parameters.
530: Returning to the use of the initial QoS parameters by issuing an update from the second QoS parameters to the initial QoS parameters similar to step 520.

The term "second QoS parameters" should be interpreted in a broad sense. i.e. not restricted to parameters explicitly specifying a bit rate, for example. The second QoS parameters may, for example, be a representation of the pre-defined UMTS QoS classes or a representation of an acceptable bit rate range. The representations being decodable by the proxy application of the network node.

In a further embodiment of the present invention the second QoS parameters comprises at least two representations of different QoS levels or classes. A first representation, the desired QoS level, specifying a level (bit rate, for example) to which the content is adapted, and a second representation, the minimum QoS level, specifying the lowest QoS level with which the delivery can still be performed. The application of the network nod may then, upon a negative response to the desired QoS level, either from the policy check or in the Update PDP context response, chose the minimum QoS level, or a level in-between, for the delivery of the content.

The network node 310 according to the present invention comprises a plurality of functional parts, preferably implemented as software code means, to be adapted to effectuate the method according to the invention. In Fig. 3b are the main functional parts, which are involved in an change of QoS during a communication session, schematically depicted. The terms "comprising" and "connected" should here be interpreted as links between functional parts and not necessarily physical connections.

The network node comprises communication means 350 for communicating on an application level with a client terminal 105 and QoS determining means 360, adapted to, on an content request issued by the client terminal 105, determine second QoS parameters associated to the requested content. The QoS determining means 360 preferably comprises, or is connected to interface means 361 for interfacing a second network node which is adapted to forwarding and receiving messages to and from the second network node, and adapted to read or decode the messages from the second network node, especially to read QoS information contained in the messages.

The comparing means 370 of the network node 310 is adapted to compare the initial QoS parameters with the second QoS parameters and is therefore preferably connected to a session database interface 371 for accessing the session database 317 to retrieve the PDP information associated with the communication session and is adapted to read the initial QoS parameters and possibly also addressing information from the PDP information.

The updating determining means 380 is adapted to determine if the QoS parameters should be updated, based on the comparison provided by the comparing means 370. The updating determining means 380 identifies requirement for updating QoS parameters if the second QoS parameters indicate a QoS that is higher, i.e. requires higher bearer capacity, than the QoS in use (the initial QoS parameters). The updating determining means 380 may comprise, or be connected to storing means 381 for storing the initial QoS parameters.

The QoS modification means 390 is adapted to issue an update from the initial quality of service parameters to the second quality of service parameters, by the use of update PDP context message. The update PDP context message should be directed to the appropriate GGSN 215 and is therefore provided with, or connected to, GGSN interface means 391. The QoS modification means may further be adapted to retrieve addressing information from the PDP information and is therefore connected to the session database interface 371.

From the exemplary embodiments of the present invention it is clear that the present invention allows an application of the network node to initiate and control the change of QoS parameters and whereby better adapted to the varying demands of transfer capacity typically experienced in a browsing/downloading session. This is possible since the present invention provides the possibility to include QoS parameters in a message that also contains the content to be downloaded.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method in a first network node in a mobile communication network for changing quality of service parameters during an ongoing communication session between the first network node and at least one client terminal using initial quality of service parameters, wherein the first network node is in communication with a second network node, wherein a message from the second network node is received by the first network node as a response of the content request from the client terminal, said message comprising the requested content and information on required quality of service parameters for delivering the content to the client terminal, and wherein the information on required quality of service parameters is read by the first network node to determine second quality of service parameters, whereby facilitating an update of quality of service parameters to the second quality of service parameters.

2. The method according to claim 1, wherein the method comprises the steps of:
- *receiving* (505) a content request issued by the client terminal;
- *forwarding* (505:1) the request to the second network node;
- *receiving* (505:2) a message from the second network node as a response of the forwarded request, the message comprising the requested content and information on required quality of service parameters for delivering the content to the client terminal;
- *reading* (505:3) from the message the information on required quality of service parameters, and determining second quality of service parameters based on said information on required quality of service parameters; and
- *issuing* (520), an update from the initial quality of service parameters to the second quality of service parameters,
whereby facilitating a delivery of a response to the content request with the use of the second quality of service parameters.

3. The method according to claim 1 or 2, wherein the message is a dedicated MIME-type.

4. The method according to claim 1 or 2, wherein the message comprises at least one content part and at least one header part and wherein the quality of service information is provided in the header part.

5. The method according to claim 4, wherein the message is a HTTP response message and the quality of service information is provided in a header line.

6. The method according to any of claims 3 to 5, wherein the information on required quality of service parameters is a representation of a required quality of service class.

7. The method according to claim 6, wherein the required quality of service class is from the group of pre-defined UMTS quality of service classes comprising:
conversational class, streaming class, interactive class and background class.

8. The method according to any of claims 3 to 6, further comprising a step, to be taken prior to the issuing step (520) of:
- determining (515) if quality of service parameters should be updated, said determining based on a comparison (510) of the initial quality of service parameters with the second quality of service parameters, and wherein the step of issuing only is taken if an update is determined in the determining step (515).

9. The method according to claim 8, wherein the step of comparing quality of service parameters (510) comprises a substep of retrieving information on the initial quality of service parameters from a session database (317).

10. The method according to claim 9, wherein the substep of retrieving information comprises the steps of:
- accessing (510:1) the session database (317) to retrieve PDP information associated with the communication session; and
- *reading* (510:2) from the PDP information the initial QoS parameters.

11. The method according to claim 10, wherein the substep of retrieving information further comprises a step of:
- reading (510:3) addressing information from the PDP information.

12. The method according to claim 11, wherein the addressing information comprises a NAS IP address which is used-by the network node (310) to identify the GGSN (215) which is controlling part of the communication with the mobile clinet terminal 105.

13. The method according to claim 12, wherein the addressing information comprises IMSI or MSISDN for the client terminal (105), which IMSI or MSISDN the network node 310 include in a message to the GGSN (215) for identifying the GTP associated with the ongoing communication session.

14. The method according to any of claims 1 to 13, wherein in the step of comparing quality of service parameters, a requirement for modifying quality of service parameters is identified if the initial quality of service parameters differ from the second quality of service parameters.

15. The method according to claim 14, wherein in the step of comparing quality of service parameters, a requirement for modifying quality of service parameters is identified if the initial quality of service parameters correspond to a lower transfer rate than the transfer rate corresponding to the second quality of service parameters.

16. The method according to claims 14 and 6, wherein the initial quality of service parameters is a representation of a first quality of service class.

17. The method according to claim 16, wherein the first quality of service classes is from the group of pre-defined UMTS quality of service classes comprising: conversational class, streaming class, interactive class and background class.

18. The method according to any of claims 1 to 17, further comprising the steps of:
- *storing* (515:1) the initial quality of service parameters; and
- *returning* (530) to the use of the initial quality of service parameters after completion of the response to the request.

19. The method according to claim 18, further comprising the step of:
accessing (522) the session database 317 to update the PDP information with the second QoS parameters.

20. The method according to any of claims 1 to 19, further comprising a step of preparing (523) the response to the client terminal by removing the information on the QoS parameters from the message.

21. Computer program products directly loadable into the internal memory of a processing means within a network node, comprising the software code means adapted for controlling the steps of any of the claims 1 to 20.

22. Computer program products stored on a computer usable medium, comprising readable program adapted for causing a processing means in a processing unit within a network node, to control an execution of the steps of any of the claims 1 to 20.

23. A network node (310) in a mobile communication network (100) adapted to provide access to services from a service provider in a communication session wherein a client terminal utilizes services provided via the network node and wherein initial quality of service parameters are used, which network node comprises:
- quality of service determining means (360), adapted to, on a content request issued by the client terminal (105), determine second quality of service parameters associated to the requested content, said quality of service determining means (360) adapted for communication with interface means (361) for interfacing a second network node, said interface means (361) adapted to forwarding and receiving messages to and from the second network node, and adapted to read or decode the messages from the second network node; and
- quality of service modification means (390) adapted to issue an update from the initial quality of service parameters to the second quality of service parameters, by the use of an update PDP context message.

24. The network node according to claim 23, wherein the interface means (361) is adapted to read quality of service information contained within a messages from the second network node.

25. The network node according to claim 23 or 24, further comprising comparing means (370) adapted to compare the initial quality of service parameters with the second quality of service parameters.

26. The network node according to claim 25, wherein the comparing means (370) is adapted for communication with a session database interface (371) for accessing a session database (317) to retrieve PDP information associated with the communication session.

27. The network node according to claim 26, wherein the session database interface (371) is adapted to read the initial quality of service parameters from the PDP information.

28. The network node according to claim 26 or 27, wherein the session database interface (371) is adapted to read addressing information from the PDP information.

29. The network node according to any of claims 23 to 28, further comprising updating determining means (380) adapted to determine if quality of service parameters in an ongoing communication session should be updated, based on the comparison provided by the comparing means (370), said updating determining means (380) is adapted to identify a requirement for updating quality of service parameters if the second quality of service parameters indicate a quality of service different from a quality of service indicated by the initial quality of service parameters.

30. The network node according to claim 29, wherein the updating determining means (380 comprises storing means (381) for storing the initial quality of service parameters.

31. The network node according to any of claims 23 to 30, wherein the quality of service modification means (390) is adapted for communication with a GGSN interface means (391) for providing communication facilities to at least one GGSN (215).

32. The network node according to any of claims 26 to 31, wherein the quality of service modification means (390) is adapted for communication with the session database interface (371) to retrieve addressing information from the PDP information.

## Patentansprüche

1. Verfahren in einem ersten Netzknoten in einem Mobilkommunikationsnetz zum Ändern von Dienstgüteparametern während einer bestehenden Kommunikationssitzung wischen dem ersten Netzknoten und mindestens einem Client-Endgerät, wobei anfängliche Dienstgüteparameter verwendet werden, wobei der erste Netzknoten mit einem zweiten Netzknoten in Kommunikation steht, wobei eine Nachricht vom zweiten Netzknoten durch den ersten Netzknoten als eine Antwort auf die Inhaltsanforderung vom Client-Endgerät empfangen wird, die Nachricht den angeforderten Inhalt und Informationen über erforderliche Dienstgüteparameter zum Liefern des Inhalts an das Client-Endgerät umfasst, und wobei die Informationen über erforderliche Dienstgüteparameter durch den ersten Netzknoten ausgelesen werden, um zweite Dienstgüteparameter zu bestimmen, wodurch eine Aktualisierung von Dienstgüteparametern auf die zweiten Dienstgüteparameter ermöglicht wird.

2. Verfahren nach Anspruch 1, wobei das Verfahren die folgenden Schritte umfasst:
- Empfangen (505) einer Inhaltsanforderung, die vom Client-Endgerät ausgegeben wird;
- Weiterleiten (505:1) der Anforderung an den zweiten Netzknoten;
- Empfangen (505:2) einer Nachricht vom zweiten Netzknoten als eine Antwort auf die weitergeleitete Anforderung, wobei die Nachricht den angeforderten Inhalt und Informationen über erforderliche Dienstgüteparameter zum Liefern des Inhalts an das Client-Endgerät umfasst;
- Auslesen (505:3) aus der Nachricht der Informationen über erforderliche Dienstgüteparameter und Bestimmen von zweiten Dienstgüteparametern auf der Basis der Informationen über erforderliche Dienstgüteparameter; und
- Ausgeben (520) einer Aktualisierung von den anfänglichen Dienstgüteparametern auf die zweiten Dienstgüteparameter,
wodurch eine Lieferung einer Antwort auf die Inhaltsanforderung mit der Verwendung der zweiten Dienstgüteparameter ermöglicht wird.

3. Verfahren nach Anspruch 1 oder 2, wobei es sich bei der Nachricht um einen dedizierten MIME-Typ handelt.

4. Verfahren nach Anspruch 1 oder 2, wobei die Nachricht mindestens einen Inhaltsteil und mindestens einen Kopfteil umfasst, und wobei die DienstgüteInformationen im Kopfteil bereitgestellt werden.

5. Verfahren nach Anspruch 4, wobei die Nachricht eine HTTP-Antwortnachricht ist, und die DienstgüteInformationen in einer Kopfzeile bereitgestellt werden.

6. Verfahren nach einem der Ansprüche 3 bis 5, wobei es sich bei den Informationen über erforderliche Dienstgüteparameter um eine Darstellung einer erforderlichen Dienstgüteklasse handelt.

7. Verfahren nach Anspruch 6, wobei die erforderliche Dienstgüteklasse aus der Gruppe von vordefinierten UMTS-Dienstgüteklassen ist, die umfasst:
Gesprächsklasse, Streaming-Klasse, interaktive Klasse und Hintergrundklasse.

8. Verfahren nach einem der Ansprüche 3 bis 6, ferner umfassend den folgenden Schritt, der vor dem Ausgabeschritt (520) auszuführen ist:
- Bestimmen (515), ob Dienstgüteparameter aktualisiert werden sollten, wobei das Bestimmen auf einem Vergleich (510) der anfänglichen Dienstgüteparameter mit den zweiten Dienstgüteparametern basiert, und wobei der Schritt des Ausgebens nur ausgeführt wird, wenn im Bestimmungsschritt (515) eine Aktualisierung bestimmt wird.

9. Verfahren nach Anspruch 8, wobei der Schritt des Vergleichens von Dienstgüteparametern (510) einen Teilschritt des Abrufens von Informationen über die anfänglichen Dienstgüteparameter aus einer Sitzungsdatenbank (317) umfasst.

10. Verfahren nach Anspruch 9, wobei der Teilschritt des Abrufens von Informationen die folgenden Schritte umfasst:
- Zugreifen (510:1) auf die Sitzungsdatenbank (317), um PDP-Informationen abzurufen, die mit der Kommunikationssitzung assoziiert sind; und
- Auslesen (510:2) aus den PDP-Informationen der anfänglichen QoS-Parameter.

11. Verfahren nach Anspruch 10, wobei der Teilschritt des Abrufens von Informationen ferner den folgenden Schritt umfasst:
- Auslesen (510:3) von Adressierungsinformationen aus den PDP-Informationen.

12. Verfahren nach Anspruch 11, wobei die Adressierungsinformationen eine NAS IP-Adresse umfassen, welche durch den Netzknoten (310) verwendet wird, um den GGSN (215) zu identifizieren, welcher einen Teil der Kommunikation mit dem mobilen Client-Endgerät (105) steuert.

13. Verfahren nach Anspruch 12, wobei die Adressierungsinformationen IMSI oder MSISDN für das Client-Endgerät (105) umfassen, wobei der Netzknoten (310) die IMSI oder MSISDN in eine Nachricht an den GGSN (215) aufnimmt, um das GTP zu identifizieren, das mit der bestehenden Kommunikationssitzung assoziiert ist.

14. Verfahren nach einem der Ansprüche 1 bis 13, wobei im Schritt des Vergleichens von Dienstgüteparametern ein Erfordernis des Modifizierens von Dienstgüteparametern identifiziert wird, wenn sich die anfänglichen Dienstgüteparameter von den zweiten Dienstgüteparametern unterscheiden.

15. Verfahren nach Anspruch 14, wobei im Schritt des Vergleichens von Dienstgüteparametern ein Erfordernis des Modifizierens von Dienstgüteparametern identifiziert wird, wenn die anfänglichen Dienstgüteparameter einer niedrigeren Übertragungsrate entsprechen als der Übertragungsrate, die den zweiten Dienstgüteparametern entspricht.

16. Verfahren nach Anspruch 14 und 16, wobei es sich bei den anfänglichen Dienstgüteparametern um eine Darstellung einer ersten Dienstgüteklasse handelt.

17. Verfahren nach Anspruch 16, wobei die erste Dienstgüteklasse aus der Gruppe von vordefinierten UMTS-Dienstgüteklassen ist, die umfasst:
Gesprächsklasse, Streaming-Klasse, interaktive Klasse und Hintergrundklasse.

18. Verfahren nach einem der Ansprüche 1 bis 17, ferner umfassend die folgenden Schritte:
- Speichern (515:1) der anfänglichen Dienstgüteparameter; und
- Zurückkehren (530) zur Verwendung der anfänglichen Dienstgüteparameter nach Beendigung der Antwort auf die Anforderung.

19. Verfahren nach Anspruch 18, ferner umfassend den folgenden Schritt:
Zugreifen (522) auf die Sitzungsdatenbank (317), um die PDP-Informationen mit den zweiten QoS-Parametern zu aktualisieren.

20. Verfahren nach einem der Ansprüche 1 bis 19, ferner umfassend einen Schritt des Vorbereitens (523) der Antwort an das Client-Endgerät durch Entfernen der Informationen über die QoS-Parameter aus der Nachricht.

21. Computerprogrammprodukte, die direkt in den internen Speicher eines Verarbeitungsmittels innerhalb eines Netzknotens geladen werden können, umfassend Softwarecodemittel, die so ausgelegt sind, dass sie die Schritte nach einem der Ansprüche 1 bis 20 steuern.

22. Computerprogrammprodukte, die auf einem in einem Computer verwendbare Medium gespeichert sind, umfassend lesbares Programm, das so ausgelegt ist, dass es ein Verarbeitungsmittel in einer Verarbeitungseinheit innerhalb eines Netzknotens veranlasst, eine Ausführung der Schritte nach einem der Ansprüche 1 bis 20 zu steuern.

23. Netzknoten (310) in einem Mobilkommunikationsnetz (100), der so ausgelegt ist, dass er Zugriff auf Dienste von einem Diensteanbieter in einer Kommunikationssitzung bereitstellt, wobei ein Client-Endgerät Dienste nutzt, die über den Netzknoten bereitgestellt werden, und wobei anfängliche Dienstgüteparameter verwendet werden, und der Netzknoten umfasst:
- Dienstgütebestimmungsmittel (360), die so ausgelegt sind, dass sie auf eine Anforderung, die vom Client-Endgerät (105) ausgegeben wird, zweite Dienstgüteparameter bestimmen, die mit dem angeforderten Inhalt assoziiert sind, wobei die Dienstgütebestimmungsmittel (360) zur Kommunikation mit Schnittstellenmitteln (361) ausgelegt sind, um mit einem zweiten Netzknoten gekoppelt zu werden, wobei die Schnittstellenmittel (361) so ausgelegt sind, dass sie Nachrichten an den zweiten Netzknoten weiterleiten und davon empfangen, und so ausgelegt sind, dass sie die Nachrichten vom zweiten Netzknoten lesen oder decodieren; und
- Dienstgütemodifikationsmittel (390), die so ausgelegt sind, dass sie durch die Verwendung einer PDP-Aktualisierungskontextnachricht eine Aktualisierung von den anfänglichen Dienstgüteparametern auf die zweiten Dienstgüteparameter ausgeben.

24. Netzknoten nach Anspruch 23, wobei das Schnittstellenmittel (361) so ausgelegt ist, dass es Dienstgüteinformationen ausliest, die in einer Nachricht vom zweiten Netzknoten enthalten sind.

25. Netzknoten nach Anspruch 23 oder 24, ferner umfassend Vergleichsmittel (370), die so ausgelegt sind, dass sie die anfänglichen Dienstgüteparameter mit den zweiten Dienstgüteparametern vergleichen.

26. Netzknoten nach Anspruch 25, wobei das Vergleichsmittel (370) zur Kommunikation mit einer Sitzungsdatenbank-Schnittstelle (371) ausgelegt ist, um auf eine Sitzungsdatenbank (317) zuzugreifen, um PDP-Informationen abzurufen, die mit der Kommunikationssitzung assoziiert sind.

27. Netzknoten nach Anspruch 26, wobei die Sitzungsdatenbank-Schnittstelle (371) so ausgelegt ist, dass sie die anfänglichen Dienstgüteparameter aus den PDP-Informationen ausliest.

28. Netzknoten nach Anspruch 26 oder 27, wobei die Sitzungsdatenbank-Schnittstelle (371) so ausgelegt ist, dass sie Adressierungsinformationen aus den PDP-Informationen ausliest.

29. Netzknoten nach einem der Ansprüche 23 bis 28, ferner umfassend Aktualisierungsbestimmungsmittel (380), die so ausgelegt sind, dass sie auf der Basis des durch die Vergleichsmittel (370) bereitgestellten Vergleichs bestimmen, ob Dienstgüteparameter in einer bestehenden Kommunikationssitzung aktualisiert werden sollten, wobei das Aktualisierungsbestimmungsmittel (380) so ausgelegt ist, dass es ein Erfordernis des Aktualisierens von Dienstgüteparametern identifiziert, wenn die zweiten Dienstgüteparameter eine Dienstgüte anzeigen, die von einer Dienstgüte verschieden ist, die durch die anfänglichen Dienstgüteparameter angezeigt wird.

30. Netzknoten nach Anspruch 29, wobei das Aktualisierungsbestimmungsmittel (380) Speichermittel (381) zum Speichern der anfänglichen Dienstgüteparameter umfasst.

31. Netzknoten nach einem der Ansprüche 23 bis 30, wobei das Dienstgütemodifikationsmittel (390) zur Kommunikation mit einem GGSN-Schnittstellenmittel (391) ausgelegt ist, um Kommunikationsmöglichkeiten für mindestens einen GGSN (215) bereitzustellen.

32. Netzknoten nach einem der Ansprüche 26 bis 31, wobei das Dienstgütemodifikationsmittel (390) zur Kommunikation mit einer Sitzungsdatenbank-Schnittstelle (371) ausgelegt ist, um Adressinformationen aus den PDP-Informationen abzurufen.

## Revendications

1. Procédé dans un premier noeud de réseau dans un réseau de communication mobile pour changer des paramètres de qualité de service pendant une session de communication en cours entre le premier noeud de réseau et au moins un terminal client utilisant des paramètres de qualité de service initiaux, dans lequel le premier noeud de réseau est en communication avec un second noeud de réseau, dans lequel un message provenant du second noeud de réseau est reçu par le premier noeud de réseau comme une réponse à la demande de contenu provenant du terminal client, ledit message comprenant le contenu demandé et une information relative aux paramètres de qualité de service demandes pour remettre le contenu au terminal client, et dans lequel l'information relative aux paramètres de qualité de service demandés est lue par le premier noeud de réseau pour déterminer des seconds paramètres de qualité de service, facilitant ainsi une mise à jour des paramètres de qualité de service sur les seconds paramètres de qualité de service.

2. Procédé selon la revendication 1, dans lequel le procédé comprend les étapes consistant à :
- recevoir (505) une demande de contenu émise par le terminal client ;
- acheminer (505 :1) la demande vers le second noeud de réseau ;
- recevoir (505 :2) un message provenant du second noeud de réseau comme une réponse à la demande acheminée, le message comprenant le contenu demandée et l'information relative aux paramètres de qualité de service demandés pour remettre le contenu au terminal client ;
- envoyer (505 :3) d'après le message l'information relative aux paramètres de qualité de service demandés, et déterminer des seconds paramètres de qualité de service sur la base de ladite information relative aux paramètres de qualité de service demandés ; et
- émettre (520) une mise à jour des paramètres de qualité de service initiaux aux seconds paramètres de qualité de service,
facilitant ainsi une remise d'une réponse à la demande de contenu en utilisant les seconds paramètres de qualité de service.

3. Procédé selon la revendication 1 ou 2, dans lequel le message est un type MIME dédié.

4. Procédé selon la revendication 1 ou 2, dans lequel le message comprend au moins une partie de contenu et au moins une partie d'en-tête et dans lequel la qualité de l'information de service est fournie dans la partie d'en-tête.

5. Procédé selon la revendication 4, dans lequel le message est un message de réponse http et la qualité de l'information de service est fournie dans une ligne d'en-tête.

6. Procédé selon une quelconque des revendications 3 à 5, dans lequel l'information relative aux paramètres de qualité de service demandés est une représentation d'une classe de qualité de service demandée.

7. Procédé selon la revendication 6, dans lequel la classe de qualité de service demandée fait partie du groupe de classes de qualité de service UMTS prédéfinies comprenant : une classe de conversation, une classe de diffusion en continu, une classe interactive et une classe d'arrière-plan.

8. Procédé selon une quelconque des revendications 3 à 6, comprenant en outre une étape, effectuée avant l'étape d'émission (520) consistant à :
- déterminer (515) si des paramètres de qualité de service doivent être mis à jour, ladite détermination étant basée sur une comparaison (510) des paramètres de qualité de service initiaux avec les seconds paramètres de qualité de service, et dans lequel l'étape d'émission est seulement entreprise si une mise à jour est déterminée lors de l'étape de détermination (515).

9. Procédé selon la revendication 8, dans lequel l'étape de comparaison des paramètres de qualité de service (510) comprend une sous-étape de récupération d'informations relative aux paramètres de qualité de service initiaux dans une base de données de session (317).

10. Procédé selon la revendication 9, dans lequel l'étape de récupération d'information comprend les étapes consistant à :
- accéder (510 :1) à la base de données de session (317) pour récupérer une information PDP associée à la session de communication ; et
- lire (510 :2) les paramètres QoS initiaux dans l'information PDP.

11. Procédé selon la revendication 10, dans lequel la sous-étape de récupération d'information comprend en outre une étape consistant à :
- lire (510 :3) une information d'adressage dans l'information PDP.

12. Procédé selon la revendication 11, dans lequel l'information d'adresse comprend une adresse IP NAS qui est utilisée par le noeud de réseau (310) pour identifier le GGSN (215) qui commande une partie de la communication avec le terminal client mobile 105.

13. Procédé selon la revendication 12, dans lequel l'information d'adressage comprend un IMSI ou MSISDN pour le terminal client (105), lequel IMSI ou MSISDN est inclus par le noeud de réseau (310) dans un message au GGSN (215) pour identifier le GTP associé à la session de communication en cours.

14. Procédé selon une quelconque des revendications 1 à 13, dans lequel à l'étape de comparaison des paramètres de qualité de service, une exigence de modification des paramètres de qualité de service est identifiée si les paramètres de qualité de service initiaux différent des seconds paramètres de qualité de service.

15. Procédé selon la revendication 14, dans lequel à l'étape de comparaison, une exigence de modification des paramètres de qualité de service st identifiée su les paramètres de qualité de service initiaux correspondent à un taux de transfert plus abs que le taux de transfert correspond aux seconds paramètres de qualité de service.

16. Procédé selon les revendications 14 et 6, dans lequel les paramètres de qualité de service initiaux sont une représentation d'une première classe de qualité de service.

17. Procédé selon la revendication 16, dans lequel les premières classes de qualité de service font partie du groupe de classes de qualité de service UMTS prédéfinies comprenant : une classe de conversation, une classe de diffusion en continu, une classe interactive et une classe d'arrière-plan.

18. Procédé selon une quelconque des revendications 1 à 17, comprenant en outre les étapes consistant à :
- mémoriser (515 :1) les paramètres de qualité de service initiaux ; et
- revenir (530) à l'utilisation des paramètres de qualité de service initiaux après parachèvement de la réponse à la demande.

19. Procédé selon la revendication 18, comprenant en outre l'étape consistant à :
accéder (522) à la bas de données de session (317) pour mettre à jour l'information PDP avec les seconds paramètres QoS.

20. Procédé selon une quelconque des revendications 1 à 19, comprenant en outre une étape de préparation (523) de la réponse au terminal client en supprimant l'information relative aux paramètres QoS du message.

21. Produits de programme informatique chargeables directement dans la mémoire interne d'un moyen de traitement à l'intérieur d'un noeud de réseau, comprenant les moyens de code de programme adaptés pour commander les étapes selon une quelconque des revendications 1 à 20.

22. Produits de programme informatique mémorisés sur un support utilisable par ordinateur, comprenant un programme lisible adapté pour amener un moyen de traitement dans une unité de traitement à l'intérieur d'un noeud de réseau à commander une exécution des étapes d'une quelconque des revendications 1 à 20.

23. Noeud de réseau (310) dans un réseau de communication mobile (100) adapté pour donner accès à des services depuis un fournisseur de services dans une session de communication, dans lequel un terminal client utilise des services fournis via le noeud de réseau et dans lequel des paramètres de qualité de service initiaux sont utilisés, lequel noeud de réseau comprend :
- un moyen de détermination de qualité de service (360) adapté pour, sur une demande de contenu émise par le terminal client (105), déterminer des seconds paramètres de qualité de service associés au contenu demandé, ledit moyen de détermination de qualité de service (360) étant adapté pour communiquer avec ledit moyen d'interface (361) pour interfacer un second noeud de réseau, ledit moyen d'interface (361) étant adapté pour acheminer et recevoir des message vers et depuis le second noeud de réseau, et adapté pour lire ou décoder le message provenant du second noeud de réseau ; et
- un moyen de modification de qualité de service (390) adapté pour émettre une mise à jour des paramètres de qualité de service initiaux aux seconds paramètres de qualité de service, en utilisant un message de mise à jour de contexte PDP.

24. Noeud de réseau selon la revendication 23, dans lequel le moyen d'interface (361) est adapté pour lire des informations de qualité de service contenues dans des messages provenant du second noeud de réseau.

25. Noeud de réseau selon la revendication 23 ou 24, comprenant en outre un moyen de comparaison (370) adapté pour comparer les paramètres de qualité de service initiaux avec les seconds paramètres de qualité de service.

26. Noeud de réseau selon la revendication 25, dans lequel le moyen de comparaison (370) est adapté pour communiquer avec une interface de base de données de session (371) pour accéder à une base de données de session (317) pour extraire une information PDP associée à la session de communication.

27. Noeud de réseau selon la revendication 26, dans lequel l'interface de base de données de session (371) est adaptée pour lire les paramètres de qualité de service initiaux dans l'information PDP.

28. Noeud de réseau selon la revendication 26 ou 27, dans lequel l'interface de base de données de session (371) est adaptée pour lire l'information d'adressage dans l'information PDP.

29. Noeud de réseau selon une quelconque des revendications 23 à 28, comprenant en outre un moyen de détermination (380) adapté pour déterminer si des paramètres de qualité de service dans une session de communication en cours doivent être mis à jour, sur la base de la comparaison fournie par le moyen de comparaison (370), ledit moyen de détermination de mise à jour (380) est adapté pour identifier une exigence de mise à jour de paramètres de qualité de service si les seconds paramètres de qualité de service indiquent une qualité de service différente d'une qualité de service indiquée par les paramètres de qualité de service initiaux.

30. Noeud de réseau selon la revendication 29, dans lequel le moyen de détermination de mise à jour (380) comprend un moyen de mémorisation (381) pour mémoriser les paramètres de qualité de service initiaux.

31. Noeud de réseau selon une quelconque des revendications 23 à 30, dans lequel le moyen de modification de qualité de service (390) est adapté pour communiquer avec un moyen d'interface GGSN (391) pour fournir des installations de communication à au moins un GGSN (215).

32. Noeud de réseau selon une quelconque des revendications 26 à 31, dans lequel le moyen de modification de qualité de service (390) est adapté pour communiquer avec l'interface de base de données de session (371) pour récupérer une information d'adressage dans l'information PDP.
